# EUROPEAN PATENT APPLICATION

(11) **EP 4 276 682 A1**
(43) Date of publication of application: **15.11.2023**
(21) Application number: 22736544.2
(22) Date of filing: 05.01.2022
(51) Int. Cl.: G06K 9/00, G06F 3/01

(54) **BIOMETRIC ACQUISITION AND RECOGNITION SYSTEM AND METHOD, AND TERMINAL DEVICE**

(30) Priority: 06.01.2021 CN 202110013199; 06.01.2021 CN 202110013200
(71) Applicant: Anhui Easpeed Technology Co., Ltd., Hefei, Anhui 230088 (CN)
(72) Inventor: ZHANG, Liangliang, Hefei, Anhui 230088 (CN); LIU, Hong, Hefei, Anhui 230088 (CN); HAN, Dongcheng, Hefei, Anhui 230088 (CN); FAN, Chao, Hefei, Anhui 230088 (CN)
(74) Representative: karo IP
(86) International application number: PCT/CN2022/070355
(87) International publication number: WO 2022/148382

(57) **Abstract**

Provided is a biological feature acquisition and recognition system (1000), including an imaging subsystem (100) and an acquisition and recognition subsystem (200). The imaging subsystem (100) includes: an imaging module (110) configured to image and display a guide picture for biological feature acquisition and recognition in an aerial target area (11); and a detection module (120) configured to send an acquisition trigger signal in response to detecting the presence of a target object in the aerial target area (11) and a posture of the target object matching a guide posture in the guide picture. The acquisition and recognition subsystem(200) includes: an image acquisition module (210) configured to acquire image information of the target object in the aerial target area (11) in response to the acquisition trigger signal; an image storage module (230) configured to store biological feature information; and an image processing module (220) connected to the image acquisition module (210) and configured to perform biological feature processing based on the image information. Further provided is a biological feature acquisition and recognition method and a terminal device (2000).

## Description

### TECHNICAL FIELD

This disclosure relates to the field of imaging and recognition technology, in particular to a biological feature acquisition and recognition system, a terminal device, and a biological feature acquisition and recognition method.

### BACKGROUND

In related technologies, fingerprint recognition systems use contact-type sensors (such as contact-type optical sensors or contact-type capacitive sensors) to capture fingerprint images, and use minutiae based matching algorithms for fingerprint matching. Among them, minutiae based matching algorithms are very sensitive to the quality of fingerprint images. However, fingerprint image acquisition devices based on contact-type sensors cannot guarantee the image quality, and have disadvantages such as small fingerprint area, low resolution, and insufficient feature points. In addition, due to the reliance on physical contact between fingers and a fingerprint sensing device, the requirement to place fingers on a scanner raises health concerns among users.

### SUMMARY

This disclosure aims to address at least one of the technical problems existing in the related art. Therefore, one purpose of this disclosure is to propose a biological feature acquisition and recognition system, which is more convenient to operate and can avoid the risk of user contact with the device during operation.

A second purpose of this disclosure is to propose a terminal device.

A third purpose of this disclosure is to propose a biological feature acquisition and recognition method.

In order to solve the above problems, the biological feature acquisition and recognition according to an embodiment of the first aspect of the present disclosure includes: an imaging subsystem and an acquisition and recognition subsystem. The imaging subsystem includes: an imaging module configured to image and display a guide picture for biological feature acquisition and recognition in an aerial target area; and a detection module configured to send an acquisition trigger signal in response to detecting the presence of a target object in the aerial target area, the target object interacting with the guide picture, and a posture of the target object matching a guide posture in the guide picture. The acquisition and recognition subsystem includes: an image acquisition module configured to acquire image information of the target object in the aerial target area in response to the acquisition trigger signal; an image storage module configured to store biological feature information; and an image processing module connected to the image acquisition module and the image storage module and configured to perform biological feature processing based on the image information, store biological feature information obtained from the processing in the image storage module, or compare the biological feature information obtained from the processing with biological feature information stored in the image storage module to identify user identity.

According to the biological feature acquisition and recognition system of the embodiment of the present disclosure, the guide picture for biological feature acquisition and recognition is imaged in the aerial target area through the imaging module, that is, the aerial target area is used as the reference plane for user operation. Therefore, the user can operate based on the guide picture presented in the aerial target area, and then the detection module sends the acquisition trigger signal to the image acquisition module in response to detecting that the posture of the target object matches the guide posture in the guide picture. The image acquisition module captures the image of the target object in the aerial target area, and the image processing module performs biological feature processing based on the image information and store or recognize the user's biological feature, thereby achieving the purpose of non-contact acquisition and recognition of the user's biological feature. Further, according to the embodiment of the present disclosure, the user touching the guide picture in the aerial target area can trigger the image acquisition module to acquire and recognize image information, without the need to set additional limiting devices to guide user operations, and during the acquisition and recognition process, there is no need to touch the device body, making non-contact biological feature acquisition and recognition operations safer and more efficient for the user.

In some embodiments, the imaging module includes: a housing formed with a display window and formed with an accommodating chamber therein; a display arranged in the accommodating chamber and configured to display the guide picture for biological feature acquisition and recognition; an optical assembly arranged in the accommodating chamber and configured to converge and image light of the guide picture displayed on the display in the aerial target area, wherein the display is arranged at a light source side of the optical assembly, and the display window is arranged at an imaging side of the optical assembly; and a main control unit arranged in the accommodating chamber and configured to control the display.

In some embodiments, the imaging module further includes a data processing module connected to the main control unit and configured to issue guidance prompt information in response to detecting that the posture of the target object does not match the guide posture in the guide picture. The main control unit is further configured to control the display to display the guidance prompt information. The optical assembly is further configured to converge and image light of the guidance prompt information displayed on the display in the aerial target area.

In some embodiments, the image acquisition module includes: at least one image acquisition unit configured to acquire the image information of the target object in the aerial target area; and a control unit connected to each of the at least one image acquisition unit and configured to control the activation of the at least one image acquisition unit in response to the acquisition trigger signal.

In some embodiments, the at least one image acquisition unit is arranged at the imaging side of the optical assembly, and an optical axis of each of the at least one image acquisition unit is at a predetermined angle with a normal of an imaging plane of the aerial target area.

In some embodiments, the at least one image acquisition unit is arranged on the imaging side of the optical assembly. A beam splitter is provided on a surface on the imaging side of the optical assembly and is configured to reflect the image information of the target object in the aerial target area to transmit the image information to the at least one image acquisition unit.

In some embodiments, an optical axis of each of the at least one image acquisition unit is perpendicular to a normal of an imaging plane of the aerial target area, and the beam splitter is a beam splitter that is semi transparent and semi reflective for visible light. Alternatively, an optical axis of each of the at least one image acquisition unit is perpendicular to the normal of the imaging plane of the aerial target area, each of the at least one image acquisition unit is an infrared image acquisition unit, and the beam splitter is a beam splitter that transmits visible light and reflects infrared light.

In some embodiments, the image acquisition module further includes: at least one total reflection unit configured to perform total reflection on the image information of the target object in the aerial target area that has been reflected by the beam splitter, to transmit the image information to the at least one image acquisition unit.

In some embodiments, the at least one image acquisition unit is arranged on the light source side of the optical assembly, and an optical axis of each of the at least one image acquisition unit is at a predetermined angle with a plane where the aerial target area is located.

In some embodiments, the optical assembly has a through hole at a position where an optical axis of each of the at least one image acquisition unit passes through the optical assembly.

In some embodiments, the image acquisition module further includes: an illumination unit connected to the control unit and configured to activate illumination in response to the acquisition trigger signal.

In some embodiments, the illumination unit is a backlight component of the display, and the main control unit is further configured to control the backlight component of the display to emit illumination light in a preset mode in response to the acquisition trigger signal; or the illumination unit is located at the imaging side of the optical assembly, and an illumination surface of the illumination unit faces toward the aerial target area.

In some embodiments, the illumination unit is arranged at the light source side of the optical assembly and faces toward the display.

In some embodiments, a diffuse reflection layer is provided on a surface of the display and an illumination surface of the illumination unit faces toward the surface of the display; or the illumination surface of the illumination unit faces toward the aerial target area.

An embodiment of a second aspect of the present disclosure provides a terminal device including: a device body; and a biological feature acquisition and recognition system according to any of the aforementioned embodiments. The biological feature acquisition and recognition system is arranged on the device body.

According to the terminal device of the embodiment of the present disclosure, by using the biological feature acquisition and recognition system provided in the above embodiment to collect and recognize user biometric information, the risk of user contacting the device during operation can be avoided, and no additional limiting devices need to be set to guide user operations, thus making non-contact fingerprint collection operations more safer and more efficient.

An embodiment of a third aspect of the present disclosure provides a biological feature acquisition and recognition method, including: providing an aerial target area; imaging a guide picture for biological feature acquisition and recognition in the aerial target area; acquiring image information of a target object in the aerial target area in response to detecting the presence of the target object in the aerial target area, the target object interacting with the guide picture, and a posture of the target object matching a guide posture in the guide picture; and performing biological feature processing based on the image information and storing biological feature information obtained from the processing, or comparing the biological feature information obtained from the processing with biological feature information that has been stored to identify user identity.

According to the biological feature acquisition and recognition method of the embodiment of the present disclosure, by imaging the guide picture for biological feature acquisition and recognition in the aerial target area, that is, using the aerial target area as the reference plane for user operation, the user can operate according to the guide picture presented in the aerial target area. The image information of the target object in the aerial target area is acquired in response to detecting that the target object's posture matches the guide posture in the guide picture, and biological feature processing is performed based on the image information and the biological feature information obtained from the processing is stored or recognized for user identity, thereby achieving the purpose of non-contact acquisition and recognition of the user's biological feature. In the embodiment of the present disclosure, the operation mode, in which the image information is acquired once the user touches the guide picture in the aerial target area and conforms to the guide posture in the guide picture, is more convenient and intuitive, without the need to set additional limiting devices to guide user operations, avoiding the risk of contact with the device body during user operation, thus making non-contact recognition operations safer and more efficient for users.

In some embodiment, said performing biological feature processing based on the image information includes: obtaining a biological feature region of interest from the image information; preprocessing the biological feature region of interest to obtain a preprocessed image; extracting feature points from the preprocessed image; and performing similarity matching on the feature points to determine a target biological feature.

In some embodiment, the method further includes, prior to said obtaining the biological feature region of interest from the image information: obtaining a three-dimensional biological feature image of the target object in the aerial target area based on the image information of the target object acquired from different direction; and unfolding the three-dimensional biological feature image into an equivalent two-dimensional biological feature image.

In some embodiment, the method further includes, subsequent to said performing similarity matching on the feature points: issuing guidance prompt information in response to detecting that the posture of the target object does not match the guide posture in the guide picture; and controlling the display to display the guidance prompt information, and converging and imaging light of the guidance prompt information displayed on the display in the aerial target area.

In some embodiment, the biological feature feature acquisition and recognition method further includes: detecting an interaction between the target object and the guide picture in the aerial target area; and providing a biological feature interaction picture based on the interaction between the target object and the guide picture; and imaging the biological feature interaction picture in the aerial target area,

Additional aspects and advantages of the present disclosure will be set forth in part in the following description which follows, and some will become apparent from the following description or learned through practice of the present disclosure.

### BRIEF DESCRIPTION OF DRAWINGS

The above and/or additional aspects and advantages of the present disclosure will become apparent and readily appreciated from the following description of embodiments, taken in conjunction with the accompanying drawings, in which:
FIG. 1 is a structural block diagram of a biological feature acquisition and recognition system according to an embodiment of the present disclosure;
FIG. 2 is a schematic structural diagram of a biological feature acquisition and recognition system according to an embodiment of the present disclosure;
FIG. 3 is a schematic structural diagram of human-machine interaction according to an embodiment of the present disclosure;
FIG. 4 is a schematic structural diagram of an optical assembly according to an embodiment of the present disclosure;
FIG. 5 is a schematic diagram of a first optical waveguide array and a second optical waveguide array according to an embodiment of the present disclosure;
FIG. 6 is a front-view schematic structural diagram of an optical assembly along a thickness direction according to an embodiment of the present disclosure;
FIG. 7 is a partial schematic structural diagram of a first optical waveguide array and a second optical waveguide array according to an embodiment of the present disclosure;
FIG. 8 is a schematic diagram of an optical path of an optical assembly according to an embodiment of the present disclosure;
FIG. 9 is a schematic structural diagram of a biological feature acquisition and recognition system according to another embodiment of the present disclosure;
FIG. 10 is a schematic diagram of image information acquisition by three image acquisition units according to an embodiment of the present disclosure;
FIG. 11 is a schematic diagram of a feature extraction manner by three image acquisition units according to an embodiment of the present disclosure;
FIG. 12 is a schematic diagram of a feature extraction manner by three image acquisition units according to another embodiment of the present disclosure;
FIG. 13 is a schematic diagram showing a predetermined angle between an optical axis of an image acquisition unit and a normal of an imaging plane of an aerial target area according to an embodiment of the present disclosure;
FIG. 14 is a schematic diagram showing an optical axis of an image acquisition unit that is perpendicular to a normal of an imaging plane of an aerial target area according to an embodiment of the present disclosure;
FIG. 15 is a schematic diagram of image information acquisition using a total reflection unit according to an embodiment of the present disclosure;
FIG. 16 is a schematic diagram showing an image acquisition unit arranged at a light source side of an optical assembly according to an embodiment of the present disclosure;
FIG. 17 is a schematic diagram of diffuse reflection of light emitted from an illumination unit by a surface of a display according to an embodiment of the present disclosure;
FIG. 18 is a schematic diagram showing an illumination surface of an illumination unit facing toward an aerial target area according to an embodiment of the present disclosure;
FIG. 19 is a schematic diagram showing an illumination unit arranged on a display according to an embodiment of the present disclosure;
FIG. 20 is a structural block diagram of a terminal device according to an embodiment of the present disclosure;
FIG. 21 is a flowchart of a biological feature acquisition and recognition method according to an embodiment of the present disclosure;
FIG. 22 is a flowchart of biological feature processing based on image information according to an embodiment of the present disclosure.

### Reference numerals:

Terminal device 2000; biological feature acquisition and recognition system 1000; device body 300; imaging subsystem 100; acquisition and recognition subsystem 200; imaging module 110; detection module 120; image acquisition module 210; image processing module 220; image storage module 230; aerial target area 11; data processing module 111; housing 10; display 20; optical assembly 30; main control unit 40; display window 1; accommodating chamber 2; image acquisition unit 21; control unit 22; beam splitter 31; illumination unit 23; filter component 24; total reflection unit 25; diffuse reflection layer 26; first optical waveguide array 6; second optical waveguide array 7; transparent substrate 8; reflection unit 9; reflective film 12; adhesive 13.

### DESCRIPTION OF EMBODIMENTS

The embodiments of this disclosure will be described in detail below, and the embodiments described with reference to the accompanying drawings are exemplary.

In order to solve the above problems, the biological feature acquisition and recognition system provided according to embodiments of the first aspect of the present disclosure is described below with reference to the accompanying drawings. The operation manner of the biological feature acquisition and recognition system is more convenient and can avoid the risk of user contact with the device during operation.

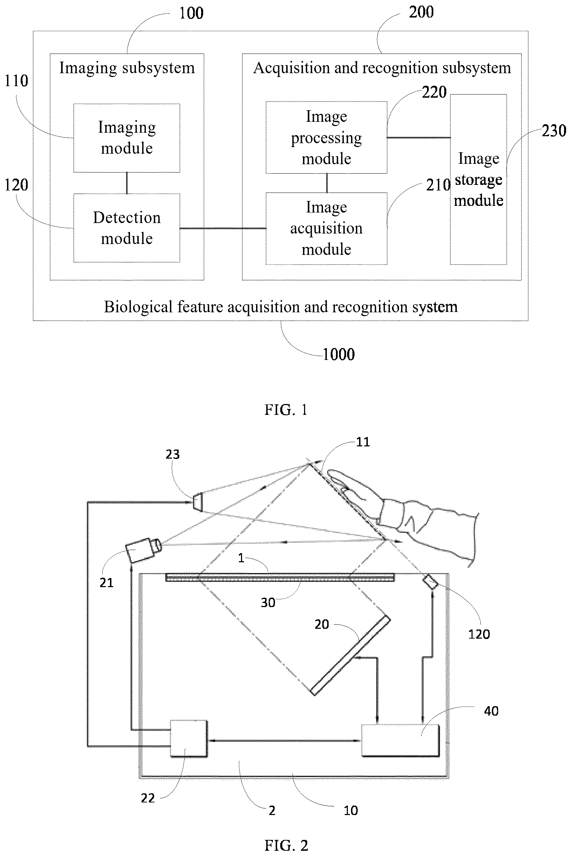

FIG. 1 is a structural block diagram of a biological feature acquisition and recognition system 1000 according to an embodiment of the present disclosure, which includes an imaging subsystem 100 and an acquisition and recognition subsystem 200. The biological feature referred to in the embodiments of the present disclosure may be a physiological feature that is common to human bodies, such as fingerprints, facial features, palm prints, and iris.

The imaging subsystem 100 includes an imaging module 110 and a detection module 120. The imaging module 110 is configured to image and display a guide picture for biological feature acquisition and recognition in an aerial target area. The detection module 120 is configured to send an acquisition trigger signal in response to detecting the presence of a target object in the aerial target area, the target object interacting with the guide picture, and a posture of the target object matching a guide posture in the guide picture.

The acquisition and recognition subsystem 200 includes an image acquisition module 210, an image processing module 220, and an image storage module 230. The image acquisition module 210 is configured to acquire image information of the target object in the aerial target area in response to the acquisition trigger signal. An acquisition area of the image acquisition module 210 covers a three-dimensional space where the aerial target area is located. The image storage module 230 is configured to store biological feature information. The image processing module 220 is connected to the image acquisition module 210 and the image storage module 230 and is configured to perform biological feature processing based on the acquired image information, and store biological feature information obtained from the processing in the image storage module 230 or compare the biological feature information obtained from the processing with biological feature information stored in the image storage module 230 to identify a user identity.

In an embodiment of the present disclosure, the guide picture for biological feature acquisition and recognition is imaged in the aerial target area through the imaging module 110, the detection module 120 sends the acquisition trigger signal to the image acquisition module 210 in response to detecting that the posture of the target object matches the guide posture in the guide picture, the image acquisition module 210 acquires the image information of the target object in the aerial target area in response to the acquisition trigger signal, the image processing module 220 performs biological feature processing based on the image information, and the image storage module 230 stores the biological feature information obtained from the processing by the image processing module 220. The biological feature acquisition and recognition system 1000 of the embodiment of the present disclosure adopts a combination of the interactive aerial imaging technology and the non-contact biological feature acquisition and recognition technology for biological feature acquisition and recognition.

Preferably, the biological feature acquisition and recognition in this embodiment may be fingerprint acquisition and recognition, and the biological feature information may be fingerprint information. The guide picture imaged and displayed by the imaging subsystem 100 in the aerial target area is relatively fixed in position for direct interaction between the user and a floating real image, that is, the user can perform actual operations based on the guide picture presented in the aerial target area.

For example, when it is necessary to acquire fingerprint information of a user, the user places a finger in the aerial target area according to the guide picture. When the user's finger is placed in the aerial target area and matches the guide posture in the guide picture, the image acquisition module 210 performs image capture on the user's fingerprint information, and the image processing module 220 processes the captured image information and stores the fingerprint information obtained from the processing in the image storage module 230, to complete the acquisition of fingerprint information of the user.

When it is necessary to recognize the fingerprint information of the user, the user places a finger in the aerial target area according to the guide picture. When the user's finger is placed in the aerial target area and matches the guide posture in the guide picture, the image acquisition module 210 performs image capture on fingerprint information of the user, and the image processing module 220 processes the captured image information, compares the fingerprint information obtained from the processing with fingerprint information stored in image storage module 230 for identification, and determines an identity of the user based on the identification results.

This disclosure triggers the acquisition and recognition subsystem 200 for image acquisition and recognition by touching the aerial target area, without the need for additional limiting devices to guide user operations. Additionally, during the acquisition and recognition process, the user does not need to touch the device body, making fingerprint acquisition and recognition safer, more convenient, and more efficient for the user.

Specifically, the imaging module 110 generates a floating real image, i.e., the guide picture, at a determined position in the air. The three-dimensional space covering the floating real image is the aerial target area. In this way, the imaging module 110 displays relevant prompt information in the aerial target area to guide the current user's actions and complete the acquisition and recognition of the current user's biological feature information. Therefore, since the user directly interacts with the floating real image, it is unnecessary to set additional limiting mechanisms to guide the user's operation, thereby reducing the risk of contact between the user and the device body, and improving the effectiveness of non-contact acquisition and recognition using the biological feature acquisition and recognition system 1000 according to the present disclosure.

The detection module 120 is configured to detect an operation of the user on the floating real image and send an acquisition trigger signal to the image acquisition module 210 in response to detecting the presence of a target object in the aerial target area and the posture of the target object matching the guide posture in the guide picture. The image acquisition module 210 acquires image information of the target object in the aerial target area in response to receiving the acquisition trigger signal. The image processing module 220 performs biological feature processing based on the image information to achieve the acquisition or recognition of a biological feature. The operation mode of the user triggering the image acquisition module 210 for acquisition and recognition by touching the aerial target area is more convenient and intuitive.

In an embodiment, the detection module 120 can periodically detect the interaction between the user and the floating real image. For example, in the fingerprint acquisition and recognition process, the interaction includes interaction position, palm direction, etc. The detection module 120 sends an acquisition trigger signal in response to detecting that the user's hand touches the floating real image area and that the touch position and hand direction correspond to the guide picture. The image acquisition module 210 captures an image of the user's hand in the floating real image area in response to receiving the acquisition trigger signal. The image processing module 220 processes the image of the hand to obtain fingerprint information, and compares the fingerprint information with stored fingerprint information to determine an identity of the user.

In an embodiment, the detection module 120 may be an optical sensor, and a sensing form thereof may include but is not limited to far/near infrared, ultrasonic, laser interference, grating, encoder, fiber optic, or CCD (charge-coupled device) forms, etc. The sensing area of the detection module 120 is located in the same plane as the guide picture and contains the three-dimensional space where the guide picture is located. In practical applications, the optimum sensing form can be selected based on installation space, viewing angle, and usage environment, in order to facilitate the user to operate in the aerial target area with the best posture and improves user experience.

The acquisition area of the image acquisition module 210 covers a location of the guide picture, i.e., the aerial target area which constitutes a biological feature acquisition area. Specifically, during the biological feature acquisition and recognition, the display position of the guide picture is relatively fixed. The detection module 120, in response to detecting direct interaction between the user and the guide picture, sends an acquisition trigger signal to trigger the image acquisition module 210 to acquire an image of the user's biological feature at the guide picture. The image processing module 220 processes the biological feature image and stores biological feature information obtained from the processing in image storage module 230 to achieve biological feature acquisition, or compares the biological feature information obtained from the processing with stored biological feature information to identify an identity of the user, achieving the goal of non-contact biological feature acquisition and recognition of the user.

When the image acquisition module 210 performs image acquisition, it can accurately fit a placement posture of the target object based on the floating real image without medium guidance. At the same time, it can quickly search for the contour of the target object and fit the location of the target object, thereby accurately extracting a center position of the target object in the image, and extracting the main features within an appropriate range around the center position. This reduces the impacts of scale, translation, and rotation on images during image acquisition, reduces the unreliability caused by image algorithms, and reduces the potential algorithm errors of images in biological feature extraction and matching.

In addition, since the location of the floating real image is determined, the embodiment of the present disclosure can set the aperture of the image acquisition module 210 as large as possible according to the actual situation, while ensuring that the acquisition area of the image acquisition module 210 covers the location of the floating real image, to increase the intake amount of light scattered by the target object during the acquisition process, thereby obtaining a clearer image of the target object.

In some embodiments, the image acquisition module 210 may be configured to acquire information of a plurality of biological features of the user in the aerial target area, and an acquisition method thereof is not limited to structured light, stereo vision, and Time of Flight (TOF). For example, for the acquisition and recognition of fingerprint information, two high-speed cameras can be used for the acquisition. The two high-speed cameras are set with a predetermined baseline (such as a camera spacing) distance, fingerprint images of different parts of at least one finger in the user's palm are acquired by using a stereo vision method, and fingerprint depth information is obtained based on at least two disparity maps corresponding to the different parts of the finger. Thus, a 3D fingerprint image of the surface of the finger is constructed by splicing, and then unfolded into an equivalent 2D fingerprint image, to obtain fingerprint information that is compatible with a large number of fingerprint databases currently obtained and archived through other methods, such as fingerprint information obtained through contact-type methods. It can be understood that it is also feasible to identify and verify user identity solely based on the obtained 3D fingerprint images, without considering compatibility with other planar fingerprint information.

The image processing module 220 is configured to perform biological feature processing on the image information acquired by the image acquisition module 210, to complete the acquisition and recognition of the biological feature. The processing on the image information includes extraction of regions of interest, image graying, image enhancing, image binarizing and thinning, feature point extraction, and feature point matching. Through a series of image preprocessing and feature extraction operations, the feature data of key points is recorded, and the feature data of the key points is stored in the image storage module 230 to achieve the purpose of acquisition for the user identity. Alternatively, the feature data of the key points is compared with feature data that has already been stored in the image storage module 230 to determine a similarity between the feature data of the key points and the feature data that has already been stored in the image storage module 230 by using an algorithm and finally the degree of matching of the biological feature is determined to determine whether the user's biological feature can pass validation, thus achieving the purpose of verifying the user identity.

The image storage module 230 can be a storage device pre-integrated within the system, a cloud server with storage capabilities that can be remotely connected through WiFi, Bluetooth or other manners, or a removable portable device such as an SD card or hard disk, which is not limited here. The storage of the user's biological feature information by the image storage module 230 is convenient for subsequent extraction to recognize the user identity.

According to the biological feature acquisition and recognition system 1000 of the embodiment of the present disclosure, the guide picture for biological feature acquisition and recognition is imaged in the aerial target area through the imaging module 110, that is, the aerial target area is used as a reference plane for user operation. The user can operate according to the guide picture presented in the aerial target area. The detection module 120 sends an acquisition trigger signal to the image acquisition module 210 in response to detecting that the posture of the target object matches the guide posture in the guide picture. The image acquisition module 210 captures an image of the target object in the aerial target area, and the image processing module 220 performs biological feature processing based on the information of the captured image to complete the acquisition of the user's biological feature or the recognition of the user identity, thereby achieving the goal of non-contact biological feature acquisition and recognition for the user. In the embodiment of the present disclosure, the user touching the aerial target area can trigger the image acquisition module 210 for image information acquisition and recognition, without the need for additional limiting devices to guide the user's operation. Additionally, during the acquisition and recognition process, there is no need to contact the device body, making it safer and more efficient for the user to perform non-contact biological feature acquisition and recognition operations.

In some embodiments, as shown in FIG. 2, the imaging module 110 of an embodiment of the present disclosure includes a housing 10, a display 20, an optical assembly 30, and a main control unit 40.

As shown in FIG. 2, the housing 10 is formed with a display window 1 and is formed with an accommodating chamber 2 therein. The display 20 is disposed in the accommodating chamber 2 and is configured to display the guide picture for biological feature acquisition and recognition. The optical assembly 30 is disposed in the accommodating chamber 2 and is configured to converge and image the light of the guide picture displayed by the display 20 in the aerial target area 11. The display 20 is arranged at a light source side of the optical assembly 30, the display window 1 is arranged at an imaging side of the optical assembly 30, and the display window 1 allows the light refracted by the optical assembly 30 to pass through. Specifically, the optical assembly 30 can be disposed at the display window 1 and is configured to refract the light emitted by the display 20, and the refracted light passes through the display window 1 and converges to form an image in the aerial target area 11. The main control unit 40 is disposed in the accommodating chamber 2 and is configured to control the display 20.

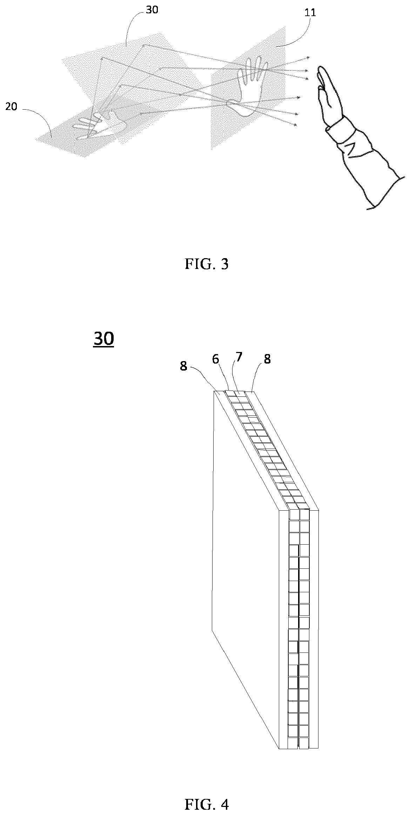

Specifically, as shown in FIG. 3, the display 20 is placed at one side, i.e., the light source side, of the optical assembly 30, and is controlled to display the guide picture. The light of the guide picture displayed by the display 20 is imaged and displayed in the aerial target area 11 by the optical assembly 30. The three-dimensional space of the guide picture is the aerial target area 11. The detection module 120 is configured to detect the interaction between the user and the guide picture, and feed the detected operation signal back to the main control unit 40. The main control unit 40 triggers the image acquisition module 210 for image acquisition, and the image processing module 220 performs biological feature processing on the acquired image information for biological feature information acquisition or recognition for user identity.

In an embodiment, the imaging mode of the display 20 can include RGB (red, green, blue) light emitting diodes (LEDs), LCD (Liquid Crystal Display), LCOS (Liquid Crystal on Silicon) devices, OLED (Organic Light Emitting Diode) arrays, projectors, lasers, laser diodes, or any other suitable display or stereoscopic display, which is not limited here. The display 20 can provide a clear, bright, and high contrast dynamic image light source. The main control unit 40 controls the display 20 to display the guide picture, and the guide picture is converged and imaged through the optical assembly 30 so as to present a clear floating real image at the aerial target area. This is convenient for the user to operate.

In an embodiment, the brightness of the display 20 can be set not lower than 500cd/m², thereby reducing the impact caused by brightness loss in propagation along the optical path. Of course, in practical applications, the display brightness of the display 20 can be adjusted based on the brightness of the ambient light.

In an embodiment, viewing angle control processing may be performed on a display image surface of the display 20 to reduce the ghost image of the aerial target area 11, improve the image quality, and also prevent others from peeping. In this way, it can be widely applicable to other input devices that require privacy information protection.

The structure of the optical assembly 30 of an embodiment of the present disclosure and its principle of implementing imaging are illustrated below.

In some embodiments, the optical assembly 30 can adopt a flat lens fixed to the housing 10. As shown in FIG. 4, the flat lens includes two transparent substrates 8, as well as a first optical waveguide array 6 and a second optical waveguide array 7 placed between the two transparent substrates 8. Among them, the first optical waveguide array 6 and the second optical waveguide array 7 are tightly attached to each other in the same plane and are arranged orthogonally. Preferably, the first optical waveguide array 6 has the same thickness as the second optical waveguide array 7, making it easy for design and production.

Specifically, as shown in FIG. 4, the flat lens includes a first transparent substrate 8, the first optical waveguide array 6, the second optical waveguide array 7, and a second glass substrate 8 sequentially from the display 20 side to the aerial target area 11 side.

The first transparent substrate 8 and the second transparent substrate 8 each have two optical surfaces, and the transparent substrates 8 have a transmittance of 90% to 100% for light with a wavelength between 390nm and 760nm. The material of the transparent substrates 8 can be at least one of glass, plastic, polymer, or acrylic resin, and is used to protect the optical waveguide arrays and filter out excess light. It should be noted that if the first optical waveguide array 6 and the second optical waveguide array 7 have sufficient strength after tight orthogonal attachment, or if the installation environment has thickness limitations, it is also possible to provide only one transparent substrate 8 or not provide any transparent substrate 8 at all.

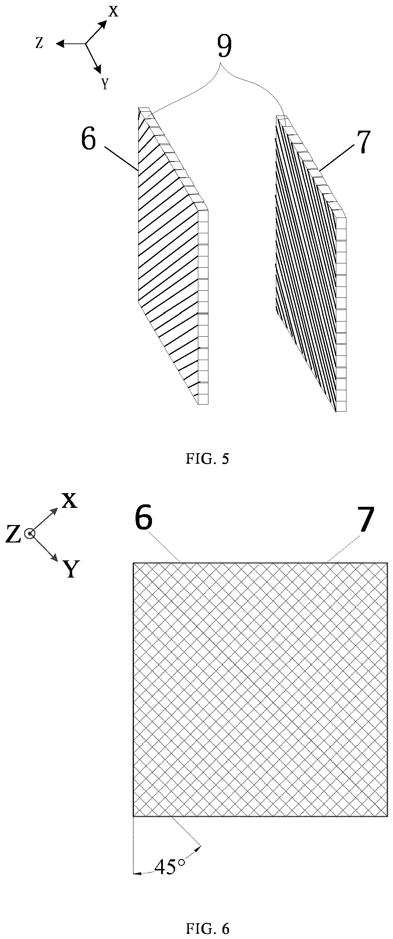

The principle of the optical assembly 30 implementing aerial imaging is that the first optical waveguide array 6 and the second optical waveguide array 7 both are composed of a plurality of reflection units 9 each having a rectangular cross section. The lengths of the reflection units 9 are limited by the peripheral size of the optical waveguide array and thus vary. As shown in FIG. 5, an extension direction of the reflection unit 9 in the first optical waveguide array 6 is X, an extension direction of the reflection unit 9 in the second optical waveguide array 7 is Y, and a Z direction is the thickness direction of the optical waveguide arrays. The extension direction (optical waveguide array direction) of the reflection unit 9 in the first optical waveguide array 6 is perpendicular to the extension direction (optical waveguide array direction) of the second optical waveguide array 7. That is, when viewed from the Z direction (thickness direction), the first optical waveguide array 6 is arranged orthogonal to the second optical waveguide array 7, so that two beams orthogonal to each other converge at a point and the object surface and the image surface (light source side and imaging side) are symmetrical about the flat lens, resulting in an equivalent negative refraction phenomenon to achieve aerial imaging.

In some embodiments, as shown in FIG. 6, the first optical waveguide array 6 or the second optical waveguide array 7 is composed of a plurality of parallel reflection units 9 arranged obliquely at an angle of 45° from the user's viewing angle. Specifically, the first optical waveguide array 6 can be composed of reflection units 9 that are arranged at 45 ° side by side in a lower-left direction and each have a rectangular cross section, while the second optical waveguide array 7 can be composed of reflection units 9 that are arranged at 45 ° side by side in the lower-right direction and each have a rectangular cross section. The arrangement directions of reflection units 9 in the two optical waveguide arrays can be interchanged. For example, the extension direction of reflection units 9 in the first optical waveguide array 6 is Y, the extension direction of reflection units 9 in the second optical waveguide array 7 is X, and the Z direction is the thickness direction of the optical waveguide arrays. When viewed from the Z direction (thickness direction), the first optical waveguide array 6 is arranged orthogonal to the second optical waveguide array 7, so that two light beams orthogonal to each other converge at a point, and it ensures that the object surface and the image surface (light source side and imaging side) are symmetrical about the flat lens, resulting in an equivalent negative refraction phenomenon to achieve aerial imaging. The optical waveguide material has an optical refractive index n1, and in some embodiments, n1>1.4, e.g., n1 takes a value of 1.5, 1.8, 2.0, etc.

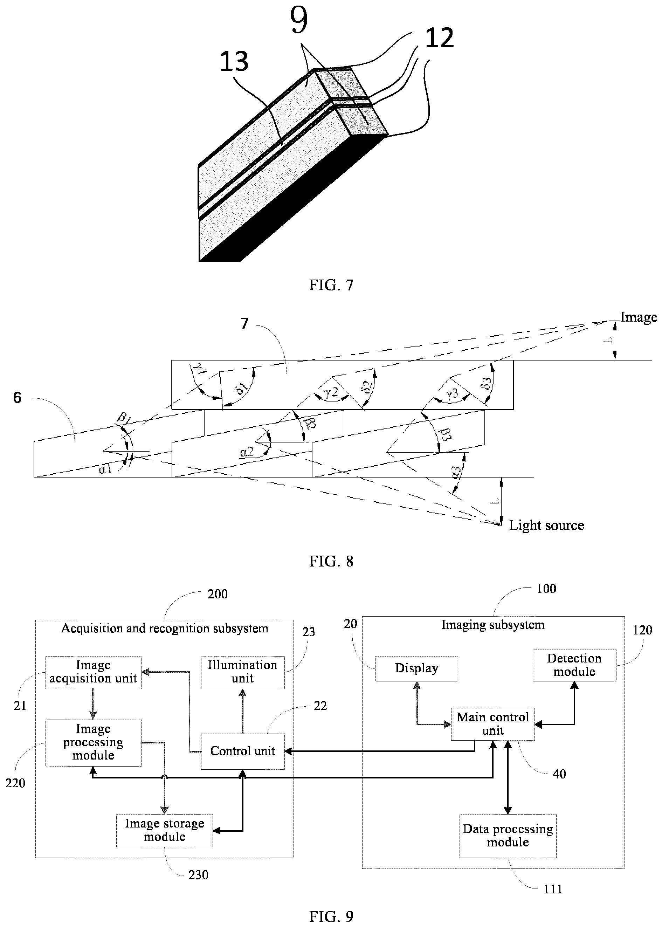

As shown in FIG. 7, for the first optical waveguide array 6 and the second optical waveguide array 7, two bonding surfaces are present between each reflection unit 9 and its adjacent reflection unit 9, and the two bonding surfaces are bonded to each other by an adhesive 13 with good transparency. Preferably, a photosensitive adhesive or a thermosetting adhesive can be selected as the adhesive 13. The thickness of the adhesive 13 is T1, where T1>0.001 mm, for example, T1=0.002 mm, T1=0.003 mm, or T1=0.0015 mm. The specific thickness can be set according to specific needs. The adhesive 13 is provided between adjacent optical waveguide arrays in the flat lens, as well as between the optical waveguide array and the transparent substrate 8, to increase firmness.

In some embodiments, the cross section of the reflection unit 9 can be rectangular, and a reflective film 12 is provided on one side or both sides of the reflection unit 9 along an arrangement direction of the reflection units 9. Specifically, in the arrangement direction of the optical waveguide array, both sides of each reflection unit 9 are coated with the reflective film 12, which can be made of metal materials such as aluminum and silver or other non-metallic compound materials that implement total reflection. The reflective film 12 functions to prevent light from entering an adjacent optical waveguide array without total reflection to form stray light that affects imaging. Alternatively, each reflection unit 9 can also have a dielectric film added on the reflective film 12, and the dielectric film is used to improve light reflectivity.

A width a and a length b of the cross section of a single reflection unit 9 satisfy: 0.1 mm≤a≤5 mm and 0.1 mm≤b≤5 mm. For example, a=2 mm and b=4 mm; alternatively, a=3 mm and b=5 mm. For displaying on a large screen, large size requirements can be achieved by splicing a plurality of optical waveguide arrays. The overall shape of the optical waveguide arrays is set according to the needs of the application scenario. In this embodiment, the two optical waveguide arrays are of a rectangular structure as a whole, in which two reflection units 9 at the diagonal positions are triangular, and the reflection unit 9 in the middle has a trapezoidal structure. The lengths of the reflection units 9 vary, with the longest reflection unit 9 located on the diagonal of the rectangle and the shortest reflection unit 9 at both ends.

In addition, the flat lens may further include an antireflective component and a viewing angle control component. The antireflective component can improve the overall transmittance of the flat lens and improve the clarity and brightness of the guide picture imaged in the aerial target area 11. The viewing angle control component can be used to eliminate the ghost image of the guide picture imaged in the aerial target area 11, reduce the observer's dizziness, prevent the observer from peeking into the interior of the device from other angles, and improve the overall aesthetics of the device. The antireflective component and the viewing angle control component can be combined or separately arranged between the transparent substrate 8 and the waveguide array, between the two waveguide arrays, or on an outer layer of the transparent substrate 8.

The imaging principle of the flat lens is explained below with reference to FIG. 8. The specific content is as follows.

At the micrometer scale, a structure with two layers of waveguide arrays that are orthogonal to each other is used to perform orthogonal decomposition of any optical signal. An original signal is projected onto the first optical waveguide array 6, and a Cartesian coordinate system is established with a projection point of the original signal as an origin and an axis perpendicular to the first optical waveguide array 6 as the x-axis. In this Cartesian coordinate system, the original signal is decomposed into two mutual orthogonal signals, i.e., signal X located on the x-axis and signal Y located on the y-axis. The signal X undergoes total reflection on the surface of the reflective film 12 at a reflection angle equal to an incident angle when passing through the first optical waveguide array 6. At this time, the signal Y remains parallel to the first optical waveguide array 6, passes through the first optical waveguide array 6, and then undergoes total reflection on the surface of the reflective film 12 at a reflection angle equal to an incident angle on the surface of the second optical waveguide array 7. The reflected signal Y and the reflected signal X constitute a reflected light signal that is mirror symmetrical with the original light signal. Therefore, light in any direction can achieve mirror symmetry after passing through this flat lens. The scattered light from any light source will converge again at a symmetrical position to form a floating real image after passing through this flat lens, which is the guide picture imaged at the aerial target area 11. The imaging distance of the floating real image is the same as a distance from the flat lens to the image source, i.e., the display 20, which is equidistant imaging. The floating real image is located in the air, and no specific carrier is needed but a real image is directly presented in the air. Therefore, the image in the space that the user sees is an image transmitted by the display 20.

In an embodiment of the present disclosure, the light emitted by the light source of the display 20 undergoes the above process on the flat lens when passing through the flat lens. Specifically, as shown in FIG. 8, the incident angles of light on the first optical waveguide array 6 are α₁, α₂, and α₃ respectively, the reflection angles of the light on the first optical waveguide array 6 are β₁, β₂ and β₃ respectively, where α₁= β₁, α₂= β₂, α₃= β₃. After reflection by the first optical waveguide array 6, the incident angles on the second optical waveguide array 7 are γ₁, γ₂ and γ₃ respectively, and the reflection angles on the second optical waveguide array 7 are δ₁, δ₂ and δ₃ respectively, where γ₁= δ₁, γ₂= δ₂, and γ₃= δ₃.

Furthermore, the incident angles after convergence and imaging are α₁, α₂, α₃... αₙ respectively. When the distance between the light source of the display 20 and the flat lens is L, the distance between the imaging position of the floating real image and the flat lens is also L, and the viewing angle ε of the floating real image is 2 × max(α)_{∘}

It can be understood that if the size of the optical waveguide array is small, the image can only be seen at a certain distance from the imaging side of the optical waveguide array; if the size of the optical waveguide array increases, a larger imaging distance can be achieved, increasing the field of view.

Preferably, an included angle between the flat lens and the display 20 is set within a range of 45° ± 5 °, which can effectively utilize the size of the flat lens, improve imaging quality, and reduce ghost image effects. In addition, if there are other requirements for the imaging position, other angles can be selected at the expense of partial imaging quality. Preferably, the size of the flat lens can be set to display the floating real image presented by the entire display 20. However, if only a partial picture displayed by the display 20 needs to be visible during actual use, the size and position of the flat lens can also be freely adjusted according to the actually displayed picture without any restrictions.

In addition, the above mainly describes the imaging principle of the flat lens using a structure with two layers of optical waveguide arrays. In some other embodiments, if a plurality of cubic column-shaped reflection units 9 each with the reflective film 12 attached on all side surfaces are arranged in an array along the X and Y directions in a structure with a single layer of optical waveguide array, that is, the two layers of optical waveguide arrays are merged into one layer, which has the same imaging principle as the structure with two layers of optical waveguide arrays and can also be used as a structure for the flat lens.

In an embodiment, the first optical waveguide array 6 and the second optical waveguide array 7 have the same thickness, which can reduce the complexity, the manufacturing difficulty, and the production costs of the first optical waveguide array 6 and the second optical waveguide array 7, and improve the production efficiency of the first optical waveguide array 6 and the second optical waveguide array 7. It should be noted that the term "same thickness" here has a relative range, and does not mean that the thicknesses are absolutely identical. That is, in order to improve production efficiency, a certain thickness difference may be present between the optical waveguide arrays on the premise that this thickness difference does not affect the imaging quality in the air.

In an embodiment, the main control unit 40 and the detection module 120 can be connected in a wired or wireless manner to transmit digital or analog signals, allowing for flexible control of the overall device volume and enhancing the electrical stability of the biological feature acquisition and recognition system 1000.

As shown in FIG. 9, the imaging module 110 according to an embodiment of the present disclosure further includes a data processing module 111 connected to the main control unit 40. The data processing module 111 is configured to issue guidance prompt information when the detection module 120 detects that the posture of the target object does not match the guide posture in the guide picture. The main control unit 40 controls the display 20 to display the guidance prompt information, and the light of the guidance prompt information displayed on the display 20 is converged and imaged in the aerial target area 11 by the optical assembly 30. The user adjusts the interaction posture based on the guidance prompt information to better achieve interaction and complete the acquisition and recognition of biological feature information of the user.

In an embodiment of the present disclosure, a light absorbing layer is provided on an inner wall of the accommodating chamber 2, which means that a black light absorbing treatment is performed on all parts in the housing 10 except the display surface of the display 20, such as spraying light absorbing paint or pasting a light absorbing film, to eliminate the diffuse reflection of light by the internal components of the housing 10 and improve the display effect of the floating real image.

As shown in FIG. 9, the image acquisition module 210 according to an embodiment of the present disclosure includes at least one image acquisition unit 21 and a control unit 22. The image acquisition unit 21 is configured to acquire image information of the target object in the aerial target area 11. The control unit 22 is connected to each image acquisition unit 21, and the control unit 22 is connected to the main control unit 40. The control unit 22 is configured to control the activation of the image acquisition unit 21 in response to the acquisition trigger signal. Specifically, the image acquisition unit 21 is configured to acquire image information of the target object in the aerial target area in response to the acquisition trigger signal.

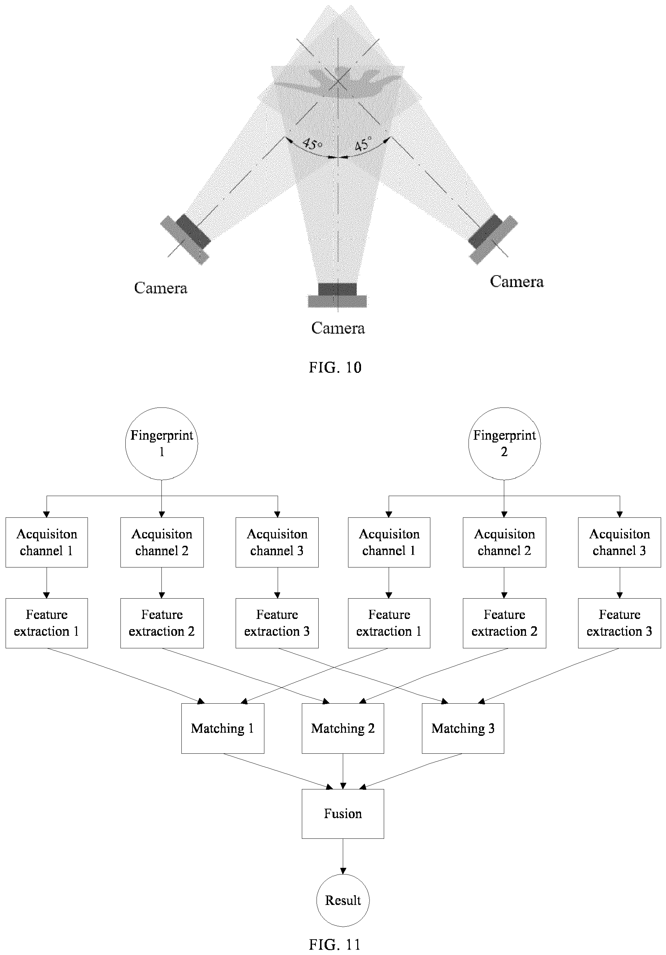

The image acquisition unit 21 may be a single high-speed CMOS camera or a plurality of high-speed CMOS cameras. As shown in FIG. 10, the image acquisition unit 21 includes three cameras, with each camera's acquisition area covering the area where the guide picture is located. The location of a focal plane of each camera is set as the aerial target area 11, so that image information of different parts of the target object can be clearly captured. For example, when the user's palm is located in the aerial target area 11, each camera can clearly capture fingerprint images of different parts of at least one finger. In addition, if the above conditions are met, preferably, the image acquisition unit 21 can use a fixed focus camera with a large aperture, which can eliminate the process of focusing on the position of the target object during image shooting, improve the speed, success rate, and reliability of image acquisition and recognition, and ensure sufficient light flux with the large aperture to improve the clarity and brightness of the shooting.

It should be noted that when the acquisition area of a single focal segment of the image acquisition unit 21 cannot cover the area where the entire floating real image is located, or even if it covers the area where the entire floating real image is located but it is impossible to obtain all the required image information at one time during the image acquisition of the target object, the image acquisition unit 21 needs to retain the necessary focusing function. Meanwhile, considering the small focusing range of the aerial target area 11 as the reference plane, the image acquisition unit 21 can obtain both visible light images and infrared images of the target object. In addition, the image acquisition unit 21 can also have a filter added for light of a corresponding wave band to eliminate the influence of ambient light.

There are various methods for the image acquisition unit 21 to extract main features within an appropriate range around the center of the target object, and the present disclosure is not limited to any of these methods. Two feature extraction methods are illustrated below, taking the image acquisition unit 21 including three high-speed CMOS cameras as an example.

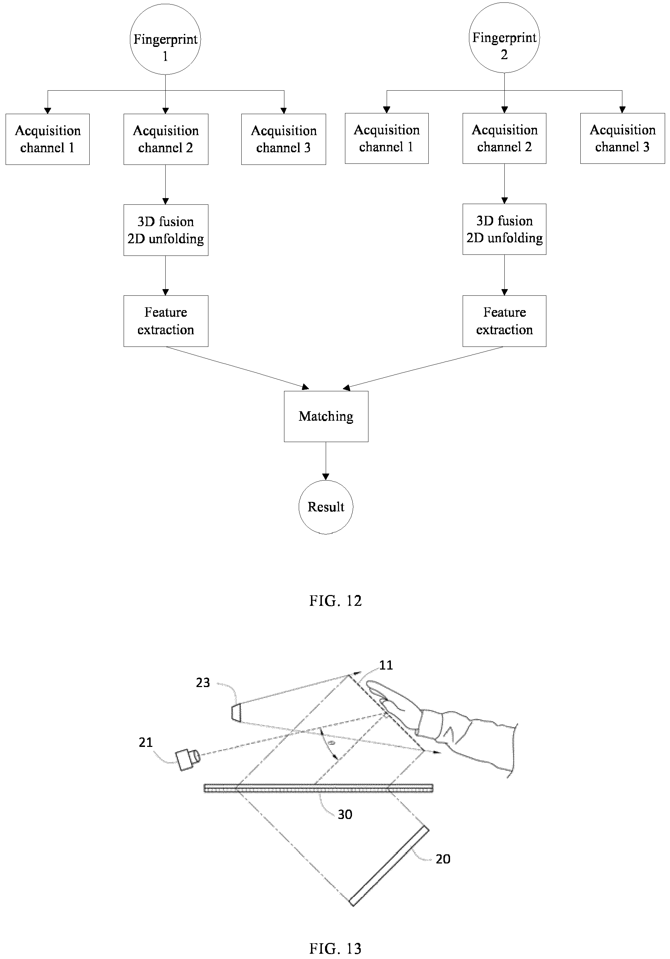

As shown in FIG. 11, the acquisition and recognition of fingerprint information is taken as an example. Three high-speed CMOS cameras in different positions and directions are provided to obtain images of a target object from different directions, The three high-speed CMOS cameras correspond to acquisition channel 1, acquisition channel 2, and acquisition channel 3 respectively. The image processing module 220 performs feature extraction and matching on the images of each acquisition channel, and fuses three sets of matching results using a mean fusion algorithm to obtain the final comparison result. Alternatively, as shown in FIG. 12, three high-speed CMOS cameras in different positions and directions are provided to obtain images of the target object from different directions. The image processing module 220 obtains depth information of the target object based on at least two disparity maps corresponding to different parts of the target object, constructs a 3D image of the surface of the target object through splicing, and then unfolds the 3D image into an equivalent 2D target object image. Thus, final comparison results can be obtained through feature extraction and feature matching on the basis of the 2D image.

The biological feature acquisition and recognition system 1000 according to an embodiment of the present disclosure is explained below with reference to FIG. 9, taking the recognition of user fingerprint information as an example.

In an initial state, the main control unit 40 causes the display 20 to display the guide picture, and the optical assembly 30 causes the guide picture to be imaged and displayed in the aerial target area 11. As shown in FIG. 3, the optical assembly 30, e.g., a flat lens, images a palm-shaped pattern in the display 20 into the air on the other side of the flat lens, which is the aerial target area 11, to guide the user for fingerprint acquisition and recognition in the correct area. At the same time, the detection module 120, e.g., an optical sensor, periodically detects interaction operations of the user, including interaction position, palm direction, etc. The user places the palm according to the displayed guide picture. When the detection module 120 detects that the user's palm touches the aerial target area in a correct position and direction, the detection module 120 sends an acquisition trigger signal to the main control unit 40. The main control unit 40 sends a control signal to the control unit 22, and the control unit 22 controls the image acquisition unit 21 to start acquiring images of fingerprints of the user's palm and to transfer information of the images to the image processing module 220 for processing and analysis and comparison with the internal fingerprint library stored in the image storage module 230 to determine whether the user identity can pass the validation. In addition, if the image acquisition unit 21 fails to acquire image information, the data processing module 111 analyzes the reason for the failure, such as the user's palm being misaligned, the user's palm moving too fast, or position shifting of the user's palm, and generates guidance prompt information and sends the guidance prompt information to the main control unit 40. The main control unit 40 controls the display 20 to display the guidance prompt information to guide movement of the user's palm to complete the acquisition of fingerprint information correctly and achieve recognition for user identity.

In addition, the detection module 120, e.g., an optical sensor, can also detect other operations of the user, including clicking, sliding, etc., and transmit interactive operation information to the main control unit 40. The main control unit 40 determines the specific operation content of the user based on an internal instruction set, such as selecting fingerprint admission mode, viewing fingerprint information, etc, and transfers UI (User Interface) operation interfaces including relevant control buttons and settings to the display 20 for image display at the aerial target area to guide the operation of the user.

It can be understood that FIG. 9 is only an example of the biological feature acquisition and recognition system 1000 according to an embodiment of the present disclosure, where the image processing module 220 can be directly integrated with the data processing module 111 in the imaging module 110, or the image processing module 220 and the data processing module 111 in the imaging module 110 can be separately set without restrictions, but both can be used to generate the guidance prompt information when no effective biological feature is recognized in the image information. Moreover, the main control unit 40 and the control unit 22 proposed in the embodiment of the present disclosure can be integrated or separately set, without any restrictions.

In an embodiment, the main control unit 40 can be directly integrated with the the display 20, or the main control unit 40 and the display 20 can be separately set. The control instruction content of the main control unit 40 can also be transmitted to other external devices for processing or controlling the other external devices, such as controlling a fingerprint lock, a punch-in time clock, etc. Furthermore, it can be understood that the image acquisition unit 21, the control unit 22, and the image processing module 220 according to the embodiment of the present disclosure can be controlled by external devices instead of being controlled by the main control unit 40.

According to an embodiment of the present disclosure, the image acquisition unit 21 is set to face directly towards the aerial target area 11. For example, when the image acquisition unit 21 is a high-speed CMOS camera, the optical axis of the camera is perpendicular to the plane where the guide picture is located. However, in practical use, due to the presence of the optical assembly 30, a tilt angle is present between the optical axis of the image acquisition unit 21 and the normal of the guide picture, and the optical axis of the image acquisition unit 21 cannot be perpendicular to the plane where the guide picture is located, resulting in distortion of the acquired image. In this regard, the embodiment of the present disclosure proposes various arrangement schemes of the image acquisition unit 21 to reduce the problem of image distortion and proposes counter measures when the distortion occurs. Several preferred arrangement schemes according to embodiments of the present disclosure are specifically illustrated below.

In some embodiments, as shown in FIG. 13, the image acquisition unit 21 is arranged on the imaging side of the optical assembly 30, and a preset angle θ is present between the optical axis of the image acquisition unit 21 and the normal of the imaging plane of the aerial target area 11, where 0° < θ < 90°. That is to say, the image acquisition unit 21 is placed above the optical assembly 30, so that the image acquisition unit 21 and the guide picture are at the same side of the optical assembly 30. In this setting mode, since the image acquisition unit 21 avoids the optical assembly 30 and a determined angle θ is present between the optical axis of the image acquisition unit 21 and the normal of the guide picture, during image processing in the embodiment of the present disclosure, it is possible to correct the deformation and distortion factors caused by the angle θ to obtain clear image information.

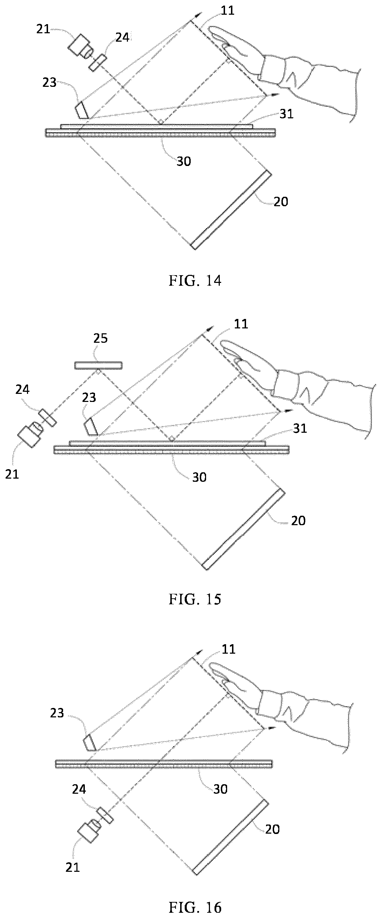

In some other embodiments, as shown in FIG. 14, the image acquisition unit 21 is arranged at the imaging side of the optical assembly 30, and a beam splitter 31 is arranged on an upper surface, i.e., the imaging side, of the optical assembly 30. Specifically, the beam splitter 31 can transmit a part of propagating light and reflect another part of the light, thereby reflecting the image information of the target object in the aerial target area 11 to transmit the image information to the image acquisition unit 21 to obtain clear image information.

Two preferred schemes for setting the beam splitter 31 on the surface of the imaging side of the optical assembly are explained below in conjunction with FIG. 14 for example.

In some embodiments, as shown in FIG. 14, the optical axis of the image acquisition unit 21 is perpendicular to the normal of the imaging plane of the aerial target area 11, and the image acquisition unit 21 adopts a visible light image acquisition unit. The beam splitter 31 is a beam splitter that is semi transparent and semi reflective for visible light, that is, a beam splitter that has 50% transmittance and 50% reflectance for visible light. The optical axis of the image acquisition unit 21 is perpendicular to the plane where the guide picture is located after being reflected by the beam splitter 31. Therefore, when the image acquisition unit 21 needs to acquire a visible light image of the target object, the image acquisition unit 21 can obtain an undeformed and undistorted image of the target object through the reflection of the beam splitter 31.

In some other embodiments, as shown in FIG. 14, the optical axis of the image acquisition unit 21 is perpendicular to the normal of the imaging plane of the aerial target area 11, and the image acquisition unit 21 adopts an infrared image acquisition unit. The beam splitter 31 is a beam splitter that transmits visible light and reflects infrared light. Because the beam splitter 31 transmits visible light and reflects infrared light, it has good transparency for the visible light wave band, and the use of this beam splitter 31 can solve the problem of reduced brightness of the floating real image. Moreover, due to the complete reflection of infrared light by the beam splitter 31, there is almost no loss of luminous flux when capturing infrared images. The image acquisition unit 21 can obtain clear images of the target object.

In some embodiments, as shown in FIG. 14, a filter component 24 that can filter visible light may be arranged on a light incidence side of the infrared image acquisition unit to further avoid interference from visible light.

In some embodiments, the beam splitter 31 can be set with a size covering the entire optical assembly 30, or the size can be freely set according to actual image acquisition requirements. For example, as shown in FIG. 14, the beam splitter 31 completely covers the surface on the imaging side of the optical assembly 30.

In some embodiments, as shown in FIG. 15, the image acquisition module 210 further includes at least one total reflection unit 25, e.g., a total reflection mirror, for total reflection of the image information of the target object in the aerial target area 11 that has been reflected by the beam splitter 31, to transmit the image information to the image acquisition unit 21. For example, as shown in FIG. 15, a total reflection mirror is used to allow the light scattered by the target object at the aerial target area 11 to undergo a plurality of total reflections before finally entering the image acquisition unit 21. By using the total reflection unit 25, it is more flexible to set the arrangement position of the image acquisition unit 21. For example, in order to reduce space occupied, the height of the device can be lowered, and the total reflection unit 25 will not change the final angle state between the optical axis and the guide picture.

In some other embodiments, as shown in FIG. 16, the image acquisition unit 21 is arranged at the light source side of the optical assembly 30, and the optical axis of the image acquisition unit 21 can be perpendicular to the plane where the aerial target area 11 is located or other angles may be present between the optical axis of the image acquisition unit 21 and the plane where the aerial target area 11 is located. For example, the image acquisition unit 21 is arranged below the optical assembly 30, that is, the image acquisition unit 21 and the display 20 are at the same side, and the optical axis of the image acquisition unit 21 is perpendicular to the plane where the aerial target area 11 is located. This effectively utilizes the optical assembly 30 having a certain degree of transparency, thereby obtaining a target object pattern without deformation or distortion. It can be understood that a preset angle θ may be present between the optical axis of the image acquisition unit 21 and the plane where the aerial target area 11 is located. Clear image information can be obtained by correcting the deformation and distortion factors caused by the angle θ during the subsequent processing process.

When the image acquisition unit 21 is located at the light source side of the optical assembly 30, image information is obtained by utilizing the transparency of the optical assembly 30. However, when obtaining the image of the target object, due to the large number of microstructures in the optical assembly 30, light is easily interfered by the microstructures. Therefore, it is necessary to eliminate these interferences during image processing. Below are two preferred solutions proposed according to the embodiments of the present disclosure.

In some embodiments, the image acquisition unit 21 adopts an infrared image acquisition unit to capture images of the target object, and a filter component 24 that filters visible light is provided on the light incidence side of the infrared image acquisition unit to avoid interferences from the microstructures.

In some other embodiments, the optical assembly 30 has a through hole at a position where the optical axis of the image acquisition unit 21 passes through the optical assembly 30, allowing the image acquisition unit 21 to directly capture the image of the target object through the through hole, reducing interferences from the microstructures of the optical assembly 30.

In some embodiments, as shown in FIG. 9, the image acquisition module 210 further includes an illumination unit 23, which is connected to the control unit 22 and which is configured to activate illumination in response to the acquisition trigger signal. Specifically, the control unit 22 is configured to control the turning-on or turning-off of the image acquisition unit 21 and the illumination unit 23. It can be understood that the control unit 22 can simultaneously control the two to be turned on or off to prevent the illumination unit 23 from being constantly on and reduce energy consumption, or the control unit 22 can control the image acquisition unit 21 and the illumination unit 23 separately, which is not limited. The embodiment of the present disclosure enhances the contrast and clarity of ridge lines in the images of the target object by uniformly illuminating the target object using the illumination unit 23.

In an embodiment, the position of the illumination unit 23 can be flexibly configured according to illumination requirements without any restrictions. It should be noted that the direction of the light source directly determines the direction of the ridge line shadow of the target object, and therefore, under the illumination of the light source in different directions, the ridge line of the captured target object image has a displacement of up to 2 to 3 times the width of the ridge line. Therefore, the embodiments of the present disclosure design various layout schemes of the illumination unit to improve the quality of the captured images. The following is a specific explanation of several preferred arrangement schemes according to embodiments of the present disclosure.

In some embodiments, the illumination unit 23 is a backlight component of the display 20, and the main control unit 40 is further configured to control the backlight component of the display 20 to emit illumination light in a preset mode in response to the acquisition trigger signal. For example, the detection module 120 sends an acquisition trigger signal in response to detecting the presence of a target object in the aerial target area and an interaction posture between the target object and the guide picture matching the guide posture in the guide picture, and the main control unit 40 controls the backlight component of the display 20 to emit illumination light in a preset mode in response to the acquisition trigger signal. The illumination light emitted by the display 20 is then converged to the aerial target area through the optical assembly 30, to illuminate the target object, which can enhance the contrast and clarity of the ridge lines in the images of the target object, and improve the quality of the captured images.

Specifically, since the imaging mode of the display 20 can include RGB light-emitting diodes, LCOS devices, OLED arrays, projectors, lasers, laser diodes, or any other suitable display or stereoscopic display, and the brightness of the display 20 is not lower than 500cd/m², in the embodiment of the present disclosure, the display 20 itself can be used as the illumination unit 23. When the user operates at the aerial target area 11, the detection module 120 sends the acquisition trigger signal to the main control unit 40 in response to sensing the presence of the target object. The main control unit 40 sends a control command to the display 20, to control the display 20, for example, the backlight component of the display 20 to emit highly bright blue strobing light once, and the highly bright strobing light can also be converged at the location of the guide picture after passing through the optical assembly 30, forming a uniform diffuse reflection on the surface of the target object. At this time, the control unit 22 synchronously controls the image acquisition unit 21 to immediately shoot the shadows of the ridge lines and valley lines of the target object, to collect the image of the target object and input the image into the image processing module 220. The image processing module 220 performs biological feature processing on information of the image of the target object and stores biological feature information obtained from the processing to complete feature acquisition, or compare the biological feature information obtained from the processing with biological feature information stored in the image storage module 230 to identify the user identity, achieving non-contact acquisition and recognition of user biological feature information.

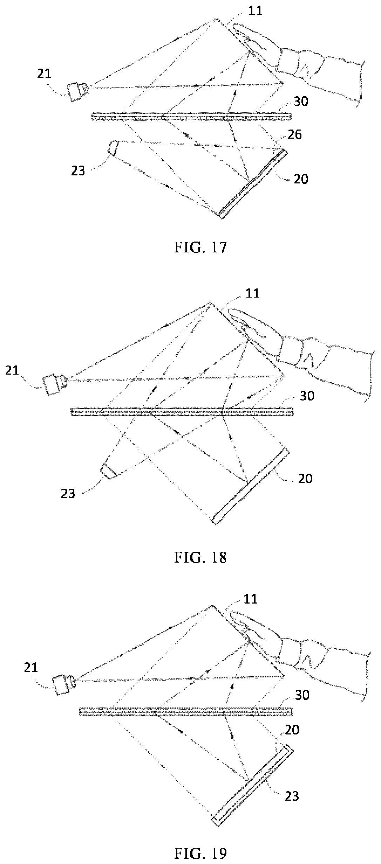

In some embodiments, as shown in FIG. 17, the illumination unit 23 is arranged below the optical assembly 30, that is, the illumination unit 23 is arranged at the light source side of the optical assembly 30 and faces toward the display 20.

It should be noted that for the setting manner where the illumination unit 23 is located at the light source side, due to the fact that all parts of the interior of the housing 10 have undergone light absorbing treatment except the display surface of the display 20, the illumination unit 23 can be arranged by the following three preferred manners in order to improve the image quality of the target object.

In some embodiments, as shown in FIG. 17, a diffuse reflection layer 26 is provided on the surface of the display 20, and the illumination surface of the illumination unit 23 faces toward the surface of the display 20. That is to say, in an embodiment of the present disclosure, the illumination unit 23 is placed on an opposite side of the display 20, and the surface of the display 20 is subjected to diffuse reflection treatment, e.g., pasting a transparent diffuse reflection film to form a diffuse reflection layer 26. Based on this, the light emitted by the illumination unit 23 can be scattered without affecting the transmission of display light. When the control unit 22 triggers the illumination unit 23 to light up, the light emitted by the illumination unit 23 is scattered by the diffuse reflection layer 26 on the surface of the display 20 and then is reflected by the optical assembly 30. Thereafter, the light also converges at the guide picture to form a uniform lighting plane to illuminate the ridge lines of the target object, thereby obtaining a high-contrast image of the target object.

In some other embodiments, as shown in FIG. 18, the illumination surface of the illumination unit 23 faces toward the aerial target area 11. That is to say, the illumination unit 23 is placed on an opposite side of the display 20. In this case, there is no need to perform diffuse reflection treatment on the surface of the display 20. Instead, the illumination surface of a light source in the illumination unit 23 is set to face toward the location of the guide picture, and the optical assembly 30 has a transmission effect, so that the light of the light source of the illumination unit 23 can directly pass through the optical assembly 30 to illuminate the target object.

In an embodiment, the illumination unit 23 includes an annular or circular light source, or the illumination unit 23 includes a plurality of light sources each with an illumination surface facing toward the aerial target area 11, and the plurality of light sources are spaced from each other at a preset spacing angle. That is to say, for the arrangement scheme of the illumination unit 23 shown in FIG. 18, one illumination unit 23 or a plurality of illumination units 23 can be provided, without any restrictions. The plurality of illumination units 23 can be arranged in certain positions to illuminate different parts of at least one target object from different angles, such as the left side, right side, front side, etc. of the fingerprint. Moreover, illumination areas of the illumination units 23 can overlap, which is not limited.

In an embodiment, the light source provided by the illumination unit 23 is not limited to the light source of the display 20 itself, an internal light source of the device, or an external light source of the device. The light source can be a visible light source, preferably a blue LED light source with a wavelength of 450 nm to 470 nm. A high-contrast image of the target object can be obtained when the target object is illuminated by the light source in this wave band. Alternatively, the light source can also be a light source of an infrared wave band to avoid interference from visible light on the display effect of the guide picture. It should be noted that the omnidirectional strong light source weakens the shadow formed by the ridge lines of the target object, which affects the clarity of the image of the target object. Therefore, an embodiment of the present disclosure preferably uses an annular light source to obtain a clear image of the target object. Preferably, optical components, such as lenses, diffusers, etc., can also be added in front of the light source to increase the lighting effect.

In some other embodiments, the illumination unit 23 is arranged on the display 20. For example, the illumination unit 23 includes an annular light source surrounding the display 20; or the illumination unit 23 is integrated with a backlight component of the display 20.

As shown in FIG. 19, in an embodiment of the present disclosure, the illumination unit 23 uses an annular LED light source which surrounds the display 20. When the illumination unit 23 lights up, the light emitted by the annular LED light source is reflected by the optical assembly 30 to illuminate the location of the guide picture. Alternatively, the illumination unit 23 is directly integrated with the backlight component of the display 20. For example, in the case of an LCD display, when LED lighting is triggered, the LCD display can be controlled to allow all light to pass through the LCD display, so that the light emitted by the illumination unit 23 passes through the LCD display and is then reflected by the optical assembly 30 to illuminate the location of the guide picture.

For the setting where the illumination unit 23 is located on the imaging side, in some embodiments, the illumination unit 23 can be arranged at the imaging side of the optical assembly 30, with the illumination surface of the illumination unit 23 facing toward the aerial target area 11. That is to say, the illumination unit 23 is arranged above the optical assembly 30, meaning that the illumination unit 23 and the guide picture are located at the same side of the optical assembly 30, as shown in FIG. 16. In this arrangement, the arrangement of the illumination unit 23 is more flexible, for example, an annular blue LED light source can be used to evenly surround a plurality of image acquisition units 21. For example, three image acquisition units 21 and three illumination units 23 are synchronously arranged to illuminate and shoot different parts of the target object at different angles. The three image acquisition units 21 are placed in the same plane with an angle of 45 ° between every two of them, ensuring that the acquired images can fully cover the effective area of the target object. It can be understood that the illumination unit 23 can play a lighting function independently of the image acquisition unit 21, one or more illumination units 23 may be provided, and an annular LED light source is preferably used to effectively cover different parts of the target object.

Therefore, according to the biological feature acquisition and recognition system 1000 of the embodiment of the present disclosure, by combining interactive aerial imaging technology with non-contact acquisition and recognition technology, based on that the position of the guide picture displayed in the air by the imaging subsystem 100 is determined, the three-dimensional space covering the guide picture, i.e. the aerial target area, is used as the reference plane for the image acquisition and recognition subsystem 200 for image acquisition. When the user touches the guide picture, the detection module 120 sends an acquisition trigger signal to trigger the image acquisition unit 21 to acquire the user's biological feature information, eliminating the need for additional limiting devices to guide the user's operation. Additionally, there is no risk of the user touching the device body during operation, making non-contact biological feature acquisition and recognition operations more convenient, safer, and more efficient. In addition, in the embodiment of the present disclosure, when the aperture of the image acquisition unit 21 meets the requirement of depth of field covering the location of the real image, the aperture can be set as large as possible according to the actual situation to increase the amount of light scattered by the target object during the acquisition process, thereby obtaining a clearer image of the target object, and also reducing the demand for the brightness of the light source of the illumination unit 23.

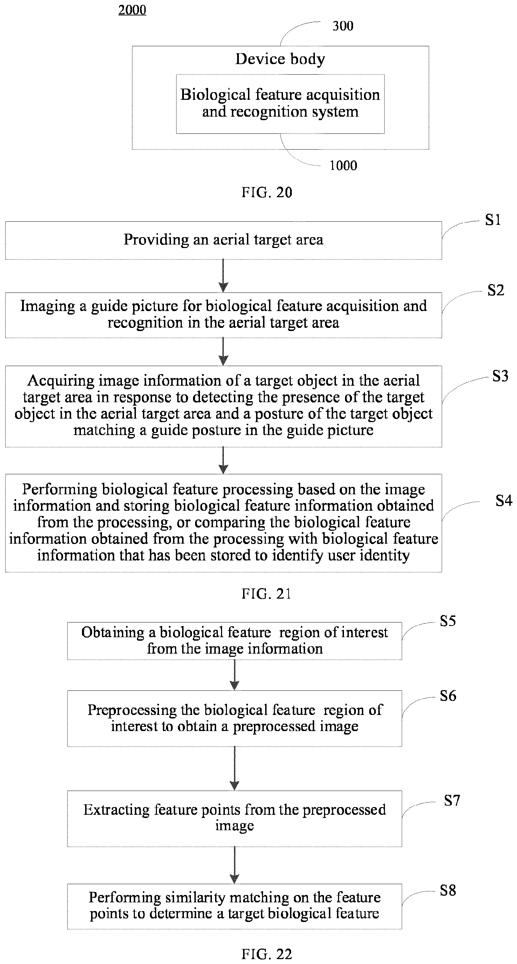

An embodiment of the second aspect of the present disclosure provides a terminal device. As shown in FIG. 20, the terminal device 2000 of the embodiment of the present disclosure includes a device body 300 and the biological feature acquisition and recognition system 1000 provided by the aforementioned embodiment. The biological feature acquisition and recognition system 1000 is arranged on the device body 300.

According to the terminal device 2000 of the embodiment of the present disclosure, the biological feature acquisition and recognition system 1000 provided by the aforementioned embodiment is used to acquire and recognize biological feature information of the user, which can avoid the risk of the user contacting the device during operation and does not require additional limiting devices to guide user operation, thus making non-contact fingerprint acquisition operations safer and more efficient.

An embodiment of the third aspect of the present disclosure provides a biological feature acquisition and recognition method. As shown in FIG. 21, the method of the embodiment of the present disclosure includes at least steps S1 to S4.

At step S1, an aerial target area is provided.

In order to solve the problems of inconvenient operation and health hazards in existing non-contact fingerprint recognition, an embodiment of the present disclosure adopts a combination of interactive aerial imaging technology and non-contact biological feature acquisition and recognition technology to efficiently complete the process of aerial fingerprint acquisition and recognition.

In an embodiment, the method in the embodiment of the present disclosure utilizes interactive aerial imaging technology to form a floating real image at a determined position in the air, with the location of the floating real image being relatively fixed in the air. Therefore, the three-dimensional space covering the floating real image can be used as the aerial target area.

At step S2, a guide picture for biological feature acquisition and recognition is imaged in the aerial target area.

Optionally, a display is controlled to display a guide picture for biological feature acquisition and recognition, and the guide picture is imaged in the aerial target area through an optical assembly.

In an embodiment, the guide picture can be understood as a floating real image used to guide user operations. By using interactive aerial imaging technology, the guide picture for biological feature feature acquisition and recognition can be imaged and displayed in the aerial target area. The user directly interacts with the floating real image, and there is no need for additional limiting mechanisms to guide the user's operations, avoiding the risk of contact between the user and the device body.

At step S3, image information of a target object in the aerial target area is acquired in response to detecting the presence of a target object in the aerial target area, the target object interacting with the guide picture, and a posture of the target object matching a guide posture in the guide picture..

Furthermore, in response to detecting the presence of a target object in the aerial target area and determining that the target object interacts with the guide picture and that the posture of the target object matches a guide posture in the guide picture, a backlight component of the display is controlled to emit illumination light in a preset mode, and image information of the target object in the aerial target area is acquired. By controlling the backlight component of the display to generate illumination light in a preset mode to illuminate the target object, the contrast and clarity of the ridge lines in the image of the target object can be enhanced, and the quality of the acquired image can be improved.

In an embodiment, the position of the guide picture generated using interactive aerial imaging technology is relatively fixed in the air, and the user can operate according to the guide picture to adjust the image acquisition area to be the aerial target area. When it is detected that a target object is present in the aerial target area and the posture of the target object matches the guide posture in the guide picture, the image information of the target object in the aerial target area is acquired. For example, when conducting fingerprint acquisition and recognition, the user places a palm at the position of the guide picture. When it is detected that the user's palm touches the area of the floating real image at the correct position and in the correct direction, the acquisition action is triggered to obtain the user's fingerprint information.

In an embodiment, during image acquisition, a placement posture of the target object is accurately fitted based on the floating real image without medium guidance. At the same time, the contour of the target object can be quickly searched and the position of the target object can be fitted, thereby accurately extracting the center position of the target object in the image and extracting main features within an appropriate range around the center position. This reduces the impact of scale, translation, and rotation on images during image acquisition, reduces the unreliability of image algorithms, and reduces the potential algorithm errors of images in biological feature feature extraction and matching.

Specifically, the imaging mode of the display can include RGB light-emitting diodes, LCOS devices, OLED arrays, projectors, lasers, laser diodes, or any other suitable display or stereoscopic display, and the brightness of the display is not lower than 500cd/m². Therefore, in the embodiment of the present invention, the display itself can be used as an illumination unit. For example, when a user operates in the aerial target area, the detection module senses the presence of the target object and sends an acquisition trigger signal to the main control unit. The main control unit then sends a control command to the display, controlling the backlight component of the display to emit a highly bright blue strobing light once. After passing through the optical assembly, the highly bright strobing light can also converge at the location of the guide picture, forming uniform diffuse reflection on the surface of the target object. At this time, the control unit synchronously controls the image acquisition unit to immediately shoot the shadows of the ridge and valley lines of the target object, collect the image of target object and input it into the image processing module. The image processing module performs biological feature processing on information of the image of the target object and store biological feature information obtained from the processing to complete feature acquisition, or compare the biological feature information obtained from the processing with biological feature information stored in the image storage module to identify the user identity, to achieve non-contact acquisition and recognition of the user's biological features.

At step S4, biological feature processing is performed based on the image information and biological feature information obtained from the processing is stored or compared with biological feature information that has already been stored to identify user identity.

In an embodiment, by processing and analyzing the obtained image information, and storing the processed image information, the acquisition of user biological features is completed.

If it is needed to recognize user biological feature information, when direct interaction between a user and the guide picture is detected, the image of the user's biological feature information is captured, and information of the captured image is processed and compared with biological feature information that has already been stored to determine whether the user's identity passes validation, thus achieving non-contact acquisition and recognition of user biological feature information.

According to the biological feature feature acquisition and recognition method of the embodiment of the present disclosure, by imaging the guide picture for the biological feature acquisition and recognition in the aerial target area, that is, using the aerial target area as the reference plane for user operation, the user can operate according to the guide picture presented in the aerial target area. When it is detected that the user's posture matches the guide posture in the guide picture, the image information of the target object in the aerial target area is acquired, biological feature processing is performed on the image information, biological feature information obtained from the processing is stored or is used to recognize user identity to achieve the purpose of non-contact acquisition and recognition of user biological feature information. Through this method, the operation of acquiring image information can be more convenient and intuitive, without the need to set additional limiting devices to guide user operations, thereby eliminating the risk of the user contacting the device body during operation, and making the user's non-contact recognition operation more natural and safer.

In some embodiments, the operation of performing biological feature processing based on the image information in the method of the embodiment of the present disclosure includes at least steps S5 to S8, as shown in FIG. 22.

At step S5, a biological feature region of interest is obtained from the image information.

The biological feature region of interest can be understood as a image region of the biological feature selected from the image information. By delineating the biological feature region of interest for further processing, processing time can be reduced and accuracy can be increased.

In an embodiment, firstly, non-biological feature background is removed from the image information. For example, biological features can be extracted from the image information through color space. The color space can adopt an HSV color model (Hue, Saturation, Value) or a YcbCr model (Y refers to brightness component, Cb refers to blue chromaticity component, Cr refers to red chromaticity component), etc.

For example, in the HSV color space, the values of skin HSV are 26<H<34, 43<S<255, and 46<V<255, where H represents hue, S represents saturation, and V represents value. By using the HSV color space, the non-biological feature background can be removed. Taking fingerprints as an example, by using H, S, and V parameters in the image information, the parts in the image information that conform to the color requirements of the fingers can be retained and the background part can be removed from the image information to complete the extraction of fingertip features.

Secondly, for backgrounds that are close to the skin and have not been removed, contour detection can be performed and a contour with a smaller area can be removed by calculating the area in the closed contour. The contour can be understood as a curve that connects continuous points with the same color or grayscale. In addition, before searching for contours, thresholding can be performed or the Canny edge detection operator can be used for boundary detection to make contour detection more accurate.

Furthermore, the biological feature region of interest is extracted through depth information. As shown in FIG. 3, the optical sensor periodically detects user interaction operations, including an interaction position, a direction of the target object, etc. Therefore, the acquired depth information of the target object is a fixed value. By removing data beyond a certain range of the depth information, the biological feature region of interest can be obtained. For example, the image information obtained through a depth camera is a number with four channels, namely RGB for color channels and D for the depth channel, which are combined to form RGB-D image information. By traversing the values of rows and columns in the image information, the depth information of each pixel can be determined. If the depth value is within a range of 20cm to 40cm, in order to meet the data information requirements of the target object, the RBG values in the image information are retained as the biological feature region of interest and other depth values that do not meet the requirements are set as black.

At step S6, the biological feature region of interest is preprocessed to obtain the preprocessed image.

In an embodiment, the preprocessing on the biological feature region of interest includes graying, enhancement, binarization, and refinement of an image to obtain the preprocessed image.

For the graying of the image, considering the relatively large calculation volume of color images, a color image is converted into a grayscale image, that is, the three RGB channels are converted into one channel to reduce the computation volume, improve the system execution speed, reduce processing latency, and ensure real-time performance of the system. The grayingof the image is to make the three color components R, G, and B of the image have the same value. Since the range of color values is [0, 255], there are only 256 grayscale levels, which means that a grayscale image can only represent 256 grayscale colors. The image graying can be achieved using methods such as component method, maximum value method, average method, or weighted average method, without any limitations. For example, taking the average method as an example, the average value of R, G, and B color components is used for processing, the formula for calculating the value of the channels is I (x, y)=1/3 * I_ R (x, y)+1/3 * I_ G (x, y)+1/3 * I_ B (x, y).

The enhancement of the image can make the ridge lines of the target object more prominent and make the spacing between the ridge lines clearer. For example, Gabor feature extraction can be used in the image enhancement process. Gabor is a linear filter for edge extraction, and its expression modes for frequency and direction are similar to the human visual system, which can provide good direction selection and scale selection for image enhancement. In addition, Gabor is not sensitive to light changes, and is suitable for texture analysis.

To further reduce the computation volume, the enhanced grayscale image can be binarized and refined. The binarization refers to binarizing the value in a range from 0 to 255 of each channel in the grayscale image to 0 or 1. For example, when binarizing the grayscale image, a threshold range can be set, the pixel value in the set threshold range is changed into 1 (such as the white part), and the pixel value not in the set threshold range is changed into 0 (such as the black part) to distinguish the biological feature region of interest that needs to be recognized. At the same time, a 2*2 rectangle is used as a template to refine the binarized image.

At step S7, feature points are extracted from the preprocessed image.

Specifically, feature point extraction is to search for, based on the preprocessed image, feature points that can describe the biological feature in the biological feature region of interest, e.g., feature points of fingerprints. In an embodiment, the feature points are related to the ridge line, including the midpoint, endpoint, bifurcation point, intersection point, etc. of the ridge line. In order to better describe feature points, the SIFT feature extraction algorithm can be used to extract the SIFT feature descriptors of the biological feature region of interest. At the same time, a sliding window specifically designed to describe ridge features can be used, for example, a 3*3 window is used to scan the entire image, and the value, position, and quantity of pixel points in the window are analyzed to determine whether there are endpoints or bifurcation points.

At step S8, similarity matching is performed on the feature points to determine a target biological feature.

In an embodiment, after the preprocessing on the image and the feature extraction operations mentioned above, the feature data of the feature points is recorded and is compared with another set of feature data to determine the similarity through algorithms, and finally determine the degree of matching of the biological feature.

For example, the feature points extracted by SIFT feature from the preprocessed image all have direction, scale and position information, and the feature points at this time have translation, scale and rotational invariance. Therefore, by performing a comparison to determine the similarity between feature points of the target object in the preprocessed image and feature points of the target object in an image that has already been stored, it can determine whether these feature points belong to the same person. For images of different parts of the target object, algorithms such as center of gravity distance method or curvature analysis method are used to crop a plurality of parts of the target object into different regional images, in order to perform feature extraction and matching algorithms separately for each part.

In some embodiments, before obtaining the biological feature region of interest in the image information, the operation of performing the biological feature processing based on the image information further includes: obtaining a three-dimensional biological feature image of the target object in the aerial target area based on the image information of the target object collected from different directions, and unfolding the three-dimensional biological feature image into an equivalent two-dimensional biological feature image, to obtain biological feature information that is compatible with a database of target object data in a large amount currently obtained and archived through other means.

In some embodiments, the method of the present disclosure further includes: sending guidance prompt information in response to detecting that the posture of the target object does not match the guide posture in the guide picture, and controlling the display to display the guidance prompt information, and converging and imaging the light of the guidance prompt information displayed on the display in the aerial target area. That is to say, when image information acquisition fails, by analyzing the reasons for the failure, for example, the user's palm being misaligned, moving too fast, or being shifted in position, the guidance prompt information is generated, and the guidance prompt information is imaged in the aerial target area to guide the user's actions and complete the acquisition of image information correctly.

The method of the embodiment of the present disclosure further includes detecting an interaction between the target object and the guide picture in the aerial target area, providing a biological feature interaction picture based on the interaction between the target object and the guide picture, and imaging the biological feature interaction picture in the aerial target area. For example, by detecting the user's interaction, including clicking, sliding, and other operations, a specific operation content of the user can be determined based on a correspondence between the interaction and an internal instruction set, for example, selecting a fingerprint admission mode, viewing fingerprint information, etc., and the corresponding biological feature interaction picture, such as an UI operation interface including relevant control buttons and settings, is displayed in the aerial target area.

A embodiment of the fourth aspect of the present disclosure provides a storage medium on which a computer program is stored. The computer program, when executed by a process, implements the biological feature acquisition and recognition method of any of the aforementioned embodiments.

In the description of this specification, any process or method description in the flowchart or otherwise described herein can be understood as representing a module, fragment, or portion that includes codes of executable instructions of one or more steps for implementing custom logic functions or processes, and the scope of the preferred embodiments disclosed herein includes other implementations, which may not be in the order shown or discussed and may include performing functions in a substantially simultaneous manner or in a reverse order based on the functions involved. This should be understood by those skilled in the art.

For example, the logic and/or steps expressed in a flowchart or otherwise described here can be considered as a ordered list of executable instructions that implement logical functions, which can be specifically embodied in any computer-readable medium for use by or in combination with instruction execution systems, apparatuses, or devices (such as computer-based systems, processor-containing systems, or other systems that can fetch and execute instructions from instruction execution systems, apparatuses, or devices). For the purpose of this specification, "computer-readable medium" can be any device that can contain, store, communicate, propagate, or transmit programs for use by or in conjunction with instruction execution systems, apparatuses, or devices. More specific examples of the computer-readable medium (non-exhaustive list) include: an electrical connection part (electronic device) with one or more wires, a portable computer disk box (magnetic device), random-access memory (RAM), read-only memory (ROM), erasable and editable read-only memory (EPROM or flash memory), optical fiber devices, and portable optical disk read-only memory (CDROM). In addition, the computer-readable medium can even be paper or other suitable media on which the program can be printed, as the program can be obtained electronically, for example, by optically scanning the paper or other media, followed by editing, interpreting, or other appropriate processing as necessary, and then stored in a computer memory.

It should be understood that the various parts of this disclosure can be implemented using hardware, software, firmware, or a combination thereof. In the above embodiments, a plurality of steps or methods can be implemented using software or firmware stored in a memory and executed by a suitable instruction execution system. For example, if implemented in hardware, as in another embodiment, it can be implemented using any of the following well-known techniques in the art or a combination thereof: discrete logic circuits with logic gates for implementing logic functions on data signals, specialized integrated circuits with suitable composite logic gates, programmable gate arrays (PGA), field programmable gate arrays (FPGA), etc.

Those skilled in the art can understand that the implementation of all or part of the steps carried by the above method embodiments can be completed by instructing the relevant hardware through a program, and the program can be stored in a computer-readable storage medium. The program, when executed, includes one or a combination of the steps of the method embodiments.

In addition, in various embodiments of the present disclosure, the various functional units can be integrated into a processing module or physically exist separately, or two or more units can be integrated into one module. The integrated module mentioned above can be implemented in both hardware and software functional modules. If the integrated module is implemented in the form of a software functional module and sold or used as an independent product, it can also be stored in a computer-readable storage medium.

The storage medium mentioned above can be a read-only memory, magnetic disk, or optical disc, etc. Although embodiments of the present disclosure have been shown and described above, it can be understood that the above embodiments are exemplary and cannot be understood as limitations to the present disclosure. Those skilled in the art may make changes, modifications, substitutions, and variations to the above embodiments within the scope of the present disclosure.

In the description of this specification, the description with reference to the terms "an embodiment", "some embodiments", "illustrative embodiments", "examples", "specific examples", or "some examples" indicates that the specific features, structures, materials, or characteristics described in conjunction with the embodiment or example are included in at least one embodiment or example of this disclosure. In this specification, the illustrative expressions of the above terms do not necessarily refer to the same embodiment or example.

While embodiments of the present disclosure have been shown and described, it will be understood by those of ordinary skill in the art that various changes, modifications, substitutions and variants can be made to the embodiments without departing from the principles of the disclosure, the scope of which is defined by the claims and their equivalents.

## Claims

1. A biological feature acquisition and recognition system, comprising:
an imaging subsystem comprising:
an imaging module configured to image and display a guide picture for biological feature acquisition and recognition in an aerial target area; and
a detection module configured to send an acquisition trigger signal in response to detecting the presence of a target object in the aerial target area, the target object interacting with the guide picture, and a posture of the target object matching a guide posture in the guide picture; and
an acquisition and recognition subsystem comprising:
an image acquisition module configured to acquire image information of the target object in the aerial target area in response to the acquisition trigger signal;
an image storage module configured to store biological feature information; and
an image processing module connected to the image acquisition module and the image storage module and configured to perform biological feature processing based on the image information, store biological feature information obtained from the processing in the image storage module, or compare the biological feature information obtained from the processing with biological feature information stored in the image storage module to identify user identity.

2. The biological feature acquisition and recognition system according to claim 1, wherein the imaging module comprises:
a housing formed with a display window and formed with an accommodating chamber therein;
a display arranged in the accommodating chamber and configured to display the guide picture for biological feature acquisition and recognition;
an optical assembly arranged in the accommodating chamber and configured to converge and image light of the guide picture displayed on the display in the aerial target area, wherein the display is arranged at a light source side of the optical assembly, and the display window is arranged at an imaging side of the optical assembly; and
a main control unit arranged in the accommodating chamber and configured to control the display.

3. The biological feature acquisition and recognition system according to claim 2, wherein
the imaging module further comprises a data processing module connected to the main control unit and configured to issue guidance prompt information in response to the detection module detecting that the posture of the target object does not match the guide posture in the guide picture;
the main control unit is further configured to control the display to display the guidance prompt information; and
the optical assembly is further configured to converge and image light of the guidance prompt information displayed on the display in the aerial target area.

4. The biological feature acquisition and recognition system according to claim 2 or 3, wherein the image acquisition module comprises:
at least one image acquisition unit configured to acquire the image information of the target object in the aerial target area; and
a control unit connected to each of the at least one image acquisition unit and configured to control the activation of the at least one image acquisition unit in response to the acquisition trigger signal.

5. The biological feature acquisition and recognition system according to claim 4, wherein the at least one image acquisition unit is arranged at the imaging side of the optical assembly, and an optical axis of each of the at least one image acquisition unit is at a predetermined angle with a normal of an imaging plane of the aerial target area.

6. The biological feature acquisition and recognition system according to claim 4, wherein
the at least one image acquisition unit is arranged on the imaging side of the optical assembly; and
a beam splitter is provided on a surface on the imaging side of the optical assembly and is configured to reflect the image information of the target object in the aerial target area to transmit the image information to the at least one image acquisition unit.

7. The biological feature acquisition and recognition system according to claim 6, wherein
an optical axis of each of the at least one image acquisition unit is perpendicular to a normal of an imaging plane of the aerial target area, and the beam splitter is a beam splitter that is semi transparent and semi reflective for visible light; or
an optical axis of each of the at least one image acquisition unit is perpendicular to the normal of the imaging plane of the aerial target area, each of the at least one image acquisition unit is an infrared image acquisition unit, and the beam splitter is a beam splitter that transmits visible light and reflects infrared light.

8. The biological feature acquisition and recognition system according to claim 6 or 7, wherein the image acquisition module further comprises:
at least one total reflection unit configured to perform total reflection on the image information of the target object in the aerial target area that has been reflected by the beam splitter, to transmit the image information to the at least one image acquisition unit.

9. The biological feature acquisition and recognition system according to claim 4, wherein the at least one image acquisition unit is arranged on the light source side of the optical assembly, and an optical axis of each of the at least one image acquisition unit is at a predetermined angle with a plane where the aerial target area is located.

10. The biological feature acquisition and recognition system according to claim 9, wherein the optical assembly has a through hole at a position where the optical axis of each of the at least one image acquisition unit passes through the optical assembly.

11. The biological feature acquisition and recognition system according to any one of claims 4 to 10, wherein the image acquisition module further comprises:
an illumination unit connected to the control unit and configured to activate illumination in response to the acquisition trigger signal.

12. The biological feature acquisition and recognition system according to claim 11, wherein
the illumination unit is a backlight component of the display, and the main control unit is further configured to control the backlight component of the display to emit illumination light in a preset mode in response to the acquisition trigger signal; or
the illumination unit is located at the imaging side of the optical assembly, and an illumination surface of the illumination unit faces toward the aerial target area.

13. The biological feature acquisition and recognition system according to claim 11, wherein the illumination unit is arranged at the light source side of the optical assembly and faces toward the display.

14. The biological feature acquisition and recognition system according to claim 13, wherein
a diffuse reflection layer is provided on a surface of the display and an illumination surface of the illumination unit faces toward the surface of the display; or
the illumination surface of the illumination unit faces toward the aerial target area.

15. A terminal device, comprising:
a device body; and
a biological feature acquisition and recognition system according to any one of claims 1 to 14, wherein the biological feature acquisition and recognition system is arranged on the device body.

16. A biological feature acquisition and recognition method, comprising:
providing an aerial target area;
imaging a guide picture for biological feature acquisition and recognition in the aerial target area;
acquiring image information of a target object in the aerial target area in response to detecting the presence of the target object in the aerial target area, the target object interacting with the guide picture, and a posture of the target object matching a guide posture in the guide picture; and
performing biological feature processing based on the image information and storing biological feature information obtained from the processing, or comparing the biological feature information obtained from the processing with biological feature information that has been stored to identify user identity.

17. The biological feature acquisition and recognition method according to claim 16, wherein said performing biological feature processing based on the image information comprises:
obtaining a biological feature region of interest from the image information;
preprocessing the biological feature region of interest to obtain a preprocessed image;
extracting feature points from the preprocessed image; and
performing similarity matching on the feature points to determine a target biological feature.

18. The biological feature acquisition and recognition method according to claim 17, further comprising, prior to said obtaining the biological feature region of interest from the image information:
obtaining a three-dimensional biological feature image of the target object in the aerial target area based on the image information of the target object acquired from different direction; and
unfolding the three-dimensional biological feature image into an equivalent two-dimensional biological feature image.

19. The biological feature acquisition and recognition method according to any one of claims 16 to 18, further comprising:
issuing guidance prompt information in response to detecting that the posture of the target object does not match the guide posture in the guide picture; and
controlling the display to display the guidance prompt information, and converging and imaging light of the guidance prompt information displayed on the display in the aerial target area.

20. The biological feature feature acquisition and recognition method according to any one of claims 16 to 19, further comprising:
detecting an interaction between the target object and the guide picture in the aerial target area; and
providing a biological feature interaction picture based on the interaction between the target object and the guide picture; and
imaging the biological feature interaction picture in the aerial target area.
